# EUROPEAN PATENT SPECIFICATION

(11) **EP 1 383 297 B1**
(45) Date of publication and mention of the grant of the patent: **05.10.2005**
(21) Application number: 02015848.1
(22) Date of filing: 16.07.2002
(51) Int. Cl.: H04M 1/02, B29C 45/14

(54) **Mouldable cover for electronic equipment**
Formbarer Deckel für elektronisches Gerät
Couvercle moulable pour appareil électronique

(43) Date of publication of application: 21.01.2004
(73) Proprietor: Sony Ericsson Mobile Communications AB, 221 88 Lund (SE)
(72) Inventor: Mansson, Johan, 227 31 Lund (SE)
(74) Representative: Dahnér, Christer

(56) References cited:
- EP-A- 0 964 417
- EP-A- 1 127 672
- WO-A-81/00654
- DE-A- 19 630 144

## Description

### TECHNICAL FIELD OF THE INVENTION

The present invention relates to electronic equipment having a wide variety of appearances. In particular, the invention relates to a cover for electronic equipment or an accessory of the same adapted to provide a plurality of distinctive appearances.

### BACKGROUND

Distinguishing the appearance of electronic equipment, such as cellular phones, MP-3 players, PDAs etc has become an important need for many users. Often, users desire distinguished appearances to meet their personal tastes and preferences instead of standard appearances. Hereinafter, an electronic equipment in the form of a cellular phone will be described.

A cellular phone is conventionally produced by assembling functional elements such as telephone circuitry, including transceiver circuitry and user interface circuitry, within a housing. The user interface circuitry includes a display, a keypad, an earpiece and a microphone. The housing traditionally includes a rear part connectable to a battery making a unit having a particular appearance. This unit is typically mated to, or includes, a front panel, which can have a distinguished appearance or a standard appearance. Different front panels, which can be selectable for a user, provide a variety of distinguished looks for instance by having different texture or colour. The keypad may also have a distinguished appearance that could be changed. A distinguished looking front panel, and a distinguished looking keypad can then selected to create one of a number of appearance combinations thereby giving the unit, for instance a cellular phone an overall distinguished appearance.

The large growth in the electronics industry, in particular the telecommunications industry has created an increased demand for a very large number of distinguished appearances for electronic equipment, such as cellular phones. Today, a typical manufacturer may be required to provide hundreds of different front panels for a cellular phone model, each panel having a unique appearance. The task of managing such a demand has prompted the need for a new way to manufacture electronic equipment such as cellular phones to easily achieve a variety of distinguished appearances that meet the present and future market demand.

Accordingly, there is a need for an electronic equipment, such as a cellular phone adapted to accommodate a plurality of distinctive appearances that overcomes the disadvantages, such as providing/selling many different front panels, for conventionally produced cellular phones. A number of patents and publications of prior art describe for instance how an overlying cover is removably attachable to a telephone housing, which includes operating buttons and a display panel. Such a cosmetic cover typically has a primary opening for viewing the display panel and secondary openings for free reception therethrough of the operating buttons.

For instance, US-A-5 768 370 describes a user changeable cosmetic phone cover provided with collars removably attached to the cover, whereby the cover and the collars could have different colours.

EP-A1-0 531 531 discloses a cordless telephone set which can change its shape to a certain extent, whereby the telephone set is made of sheet-like flexible material.

EP-A1-1 127 672 describes a method of manufacturing a shell element provided with an undercut and a shell element manufatured by said method.

EP-A2-0 964 417 describes an article comprising co-injection molded component having integral component such as a light guide.

WO-A1-81/00654 describes a housing for electronic apparatus with elastomer outer layer.

DE-A1-196 30 144 describes a cover for mobile equipment, which cover is made of thermoplatic material.

However, there is still a demand for a user changeable cover that has different appearances that could be changed more easily than prior art covers, such as the above disclosed covers.

### SUMMARY

It is an object of the present invention to provide a cover for electronic equipment whose appearance could easily be changed by a user of the equipment to a great number of appearances.

Herein, the term "cover" refers to a cover for electronic equipment, as well as any accessory for such equipment. Any type of cover, such as a front panel, a pocket like cover or other for electronic equipment suitable cover, for instance in the form of an accessory, is included within the term without departing from the invention.

An aspect of the invention is to provide such a cover that is adapted to be moulded by a user to obtain different appearances.

According to a preferred embodiment of the invention, there is provided a cover for an electronic equipment adapted to provide a plurality of distinctive appearances, said cover being adapted to at least partly enclose a housing of the electronic equipment, which housing comprises functional components, for instance to enable communication to take place, said cover being removably attachable to said housing, said cover including an outer face having a distinctive appearance, characterised in that said cover comprises at least one part thereof comprising material having such material characteristics, that the appearance could be changed by a user by re-moulding the same cover, that the user could provide by himself by making use of very simple means normally available in a home environment, without destroying the cover and that parts dependent on matching with the housing mechanically will be fixed.

Preferably, the material comprises thermomouldable material, for instance adapted to be mouldable by heating the material to a temperature well above environment temperature.

Preferably, the material comprises thermoplastic material, in particular at least one thermoplastic polymer or polymer blend.

Preferably, the material comprises a plurality of different polymers or polymer blends, or alternatively, or in addition, foam-like materials, rubbers or other at environment temperature mouldable materials.

Preferably, the material is selected from polyolefins, for instance polypropylene, polyethylene or copolymers thereof.

Preferably, the material comprises light-reflecting crystals, light guiding material and/or colour particles that can be activated by the user.

Major advantages of the invention over current covers include, but is not limited to, the following: a new appearance can be quickly altered, manufacturing/providing a great number of appearances is inexpensive, and a user is allowed to by himself easily mould (change the appearance of) the equipment by snapping on a moulded cover.

Another advantage of the invention is that the cover could also be provided to absorb mechanical shocks, and could also be adapted to be unbreakable when dropped.

Yet another advantage is that the cover could provide a comfortable grip, which could be adapted to a particular user.

### BRIEF DESCRIPTION OF DRAWING FIGURES

A better understanding of the present invention will be accomplished upon review of the following detailed description of embodiments thereof, when considered in conjunction with accompanying drawing figures, wherein:
Fig. 1 is an exploded perspective view of an electronic equipment, herein a cellular phone, provided with a cover according to a preferred embodiment of the invention, about to be assembled or disassembled (illustrated by dashed lines);
Fig. 2 is a detail view in cross-section of the mounting means for attaching the cover to the housing;
Fig. 3 is a flow chart illustrating a method for producing a cover for electronic equipment according to a preferred embodiment of the invention.

### DETAILED DESCRIPTION OF EMBODIMENTS

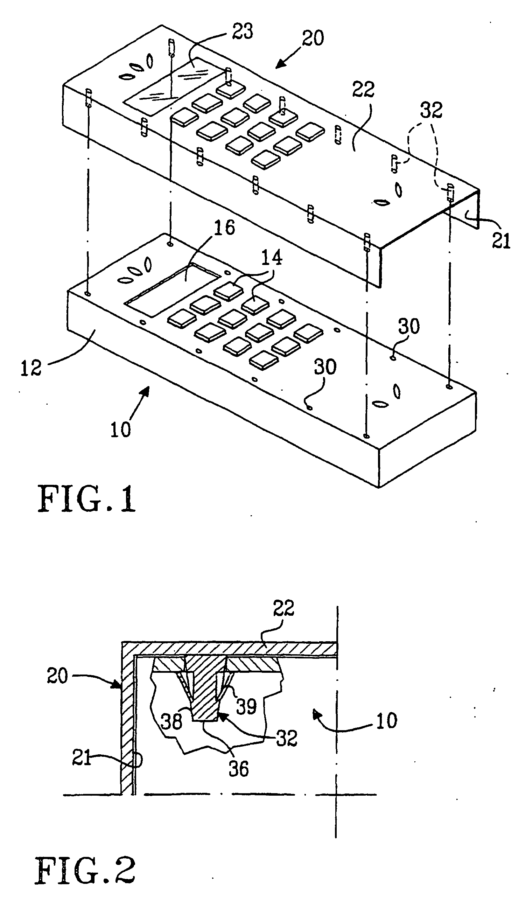

Now referring to the drawing figures and, initially, to Fig. 1, which generally illustrates an electronic equipment 10, in this case a cellular phone and a cover 20, according to a preferred embodiment of the invention, embodying the invention. More specifically, the electronic equipment 10, in the following denoted "cellular phone", but not limited thereto, comprises a removably attachable snap-on cover 20, according to a preferred embodiment of the invention, to enable it to provide a plurality of distinctive appearances.

The cellular phone 10 includes a housing 12 containing all of the functional components which enable communications to take place. These functional components include, among numerous others, operating buttons 14 for the operation of the cellular phone and a display panel 16 for displaying information concerning operation of the cellular phone. A cover 20 having an inner 21 and an outer 22 surface is coextensive with and overlies the housing 12 when assembled. The cover 20 is removably attachable to the housing 12, so that a user can change the appearance of (mould) the electronic equipment in a wide variety of external appearances, and also typically change the feel of the equipment (softer surface etc). The outer surface 22 has a primary opening 23 for viewing the display panel 16 and secondary openings 24 for free reception therethrough of the operating buttons 14. Alternatively, it is also possible that the cover 20 surrounds the housing 12 or is provided in some other suitable manner, even if not illustrated in this particular embodiment without departing from the invention.

The cover 20 is adapted to be moulded, typically change its shape and/or surface texture, and/or colour, by "self-assessment" of a user. Herein, the term "self-assessment" includes all types of changes that a user could provide by himself, typically in a home environment, i. e. an environment that does not provide special tools etc for moulding the cover. Herein, the term "moulding" includes operations such as bending, stretching and other operations that change the shape or texture, typically almost without limitation. These operations are only examples of moulding, and are not intended to be limiting. In prior art documents, typically bending is possible, but is limited to a certain extent, as disclosed for instance in EP-A1- 0 582 325, whereby moulding is not possible.

The moulding could be provided by heating the cover to a suitable temperature, while protecting the functional elements such as electronics provided in the housing, which is separated from the cover, from being damaged by the heat.

Preferably, suitable materials such as thermoplastic polymers or polymer blends thereof could be provided. Preferably, the material characteristics are chosen so that a suitable moulding temperature is obtained, for instance well above environment temperature. One requirement could for instance be that a cover should be mouldable in a home environment, say at 100 °C, but will not float away during service, for instance in a car a hot day, where the temperature could be 50 °C or more.

Also other materials, for instance foam-like materials, rubbers or the like could be employed. Preferably, these materials are selected from materials that do not require heating to be mouldable. Examples are: ethylene vinyl acetate copolymer or the like. Also in this case, electronic components are separated from the cover thereby preventing damage during moulding.

Also other, appropriate re-mouldable materials, for instance thermoplastic materials including metals, fabrics, or layered materials could be employed depending on how mouldable they are required to be. For instance, a material could be slightly mouldable, for instance possible for a user to bend at room temperature, but require heating in boiling water to be more mouldable, without departing from the invention.

However, the material of the cover close to parts that are dependent on matching with the housing mechanically will be fixed even when heated. Preferably, this could be provided by using different thickness of materials for the cover, or different materials.

Examples of mouldable materials are thermoplastic polymers having a melting point well above 100 °C, since the cover is heated (for instance in boiling water, steam or the like) so that it is just mouldable, but not melting or destroyed. Preferably, the moulding should be easy to carry out by the user, so he can change the shape according to any preference. Other suitable thermoplastic polymers having different, but suitable melting points could also be provided without departing from the invention as defined in the claims.

According to a preferred embodiment of the invention, the thermoplastic material is selected from polyolefins, for instance polypropylene, polyethylene etc or copolymers thereof.

Typically, the thermoplastic material is selected from such materials having a melting point within the range of 100-200 °C.

Furthermore, the material for the cover could comprise light-reflecting crystals, light guiding material and/or colour particles that can be activated by the user.

The cover could also comprise a plurality of parts of different thermoplastic polymers that could be exchanged, for instance to give the cover parts with different colours. Herein, the term colour" when describing the invention will be taken to include shades of colour, texture, and other surface differences of a component such that a viewer can readily distinguish one component from another by its surface appearance. However, it will also be understood as desirable, in certain instances for two or even three of the components to display the same colour. What is important is that the user has the ability to mould the material by himself to obtain whatever appearance is pleasing to him at the moment, since personalisation is of great importance for future products.

The manner of assembling and attaching the cover to the housing will now be explained by an example not limiting the invention.

The housing 12 is formed with a plurality of similar sized mounting holes 30 (Fig. 1). The cover 20 includes a plurality of associated mounting pegs 32 which project transversely from the inner surface 21 and are fittingly received in the mounting holes 30 when the housing 12 is attached to the cover 20. Now is referred to Fig. 2. The mounting holes 30 in the hosing 12 are generally circular and each of the mounting pegs 32 is generally shaped as a right truncated cone having a longitudinal axis perpendicular to the inner surface 21. Each mounting peg 32 includes a base end (not shown) at the inner surface 21, a tip end 36 distant from the base end, an outer peripheral surface 38, and a longitudinally extending rib 39 having a depth projecting radial away from the outer peripheral surface which is a maximum at the base end and a minimum at the tip end. When the mounting pegs 32 are inserted into their associated mounting holes, the rib 39 of each mounting peg frictionally engages the hole and provides for an interference fit, the interfering force increasing as the mounting pegs are force into a seating relationship.

Alternatively, the cover could also be provided with a plurality of locking tabs integral with and extending transversely of the inner surface, which locking tabs fit into mounting slots of the housing. Also other alternatives for attaching the cover to the housing known by a person skilled in the art could be provided without departing from the invention.

By reason of the construction just described, a user can readily provide a cellular phone 10 with a desirable contour and/or colour scheme. At a later time, whenever desired, the user can disassemble the cover and the housing, without in any way interfering with the operability of the telephone, provide the cover with another appearance by heating the same, and reassemble the cover and housing then displaying another appearance. This can be done readily, time and time again, without harming the components within the housing and with minimal increase in cost of the cellular phone.

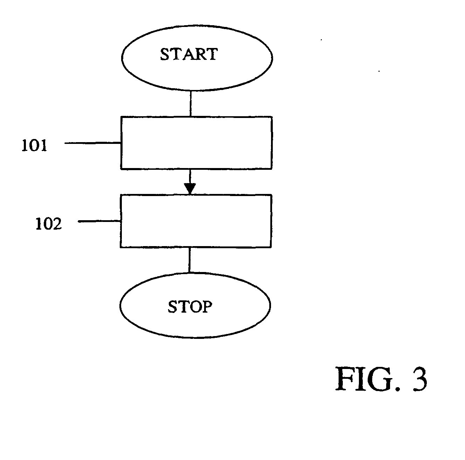

The invention furthermore relates to a method for producing a cover according to the invention. Such a method for producing a cover according to the invention will be described. Fig. 3 shows the key steps in an injection moulding process.

In a first step 101, a conventional mould for instance made up of two main parts: a first part, which forms the rear of the mould; a second part which forms the front of the mould is provided, whereby a recess is configured to define the cover.

In a second step 102, thermoplastic material, is injected, for instance via nozzles connected to reservoirs, different reservoirs for different materials. Also just one reservoir could be provided if only one material is required.

Example materials used in the injection moulding process may be rubbers or plastics having a variety of different characteristics. Also carrier film(s) could be provided into the mould, as well as in-mould decoration (IMD) or in-mould labelling (IML).

Any moulding material which offers suitable mechanical properties may be chosen. For instance, the weight, hardness or rigidity may all be factors which are taken into account.

Also any other similar advantageous manufacturing method could be provided.

While preferred embodiments of the invention have been disclosed in detail, it should be understood by those skilled in the art that various other modifications may be made to the illustrated embodiments without departing from the scope of the invention as described in the specification and defined in the appended claims.

## Claims

1. Cover for an electronic equipment adapted to provide a plurality of distinctive appearances, said cover (20) being adapted to at least partly enclose a housing (12) of the electronic equipment (10), which housing (12) comprises functional components, for instance to enable communication to take place, said cover (20) being removably attachable to said housing (12), said cover (20) including an outer face (22) having a distinctive appearance, **characterised in that** said cover (20) comprises at least one part thereof comprising material having such material characteristics, that the appearance could be changed by a user by re-moulding the same cover, that the user could provide by himself by making use of very simple means normally available In a home environment, without destroying the cover and that parts dependent on matching with the housing (12) mechanically will be fixed.

2. Cover according to claim 1, wherein the material comprises thermomouldable material, for instance adapted to be mouldable by heating the material to a temperature well above environment temperature.

3. Cover according to claim 1 or 2, wherein the material comprises thermoplastic material.

4. Cover according to any one of the claims 3, wherein the thermoplastic material comprises at least one thermoplastic polymer or polymer blend.

5. Cover according to claim 4, wherein the cover comprises a plurality of different polymers or polymer blends.

6. Cover according to any one of the claims 4-5, wherein the material is selected from polyolefins, for instance polypropylene, polyethylene or copolymers thereof.

7. Cover according to claim 1, wherein the material comprises foam-like materials, rubbers or other at environment temperature mouldable materials.

8. Cover according to any one of the claims 1-7, wherein the material comprises light-reflecting crystals, light guiding material and/or colour particles that can be activated by the user.

9. Cover according to any one of the preceding claims, wherein the cover (20) is an accessory.

## Patentansprüche

1. Abdeckung für ein elektronisches Gerät, ausgebildet zum Vorsehen mehrerer besonderer Aussehensformen, wobei die Abdeckung (20) ausgebildet ist, um ein Gehäuse (12) des elektronischen Geräts (10) wenigstens teilweise zu umschließen, welches Gehäuse (12) Funktionskomponenten zum Beispiel zum Ermöglichen des Stattfindens einer Kommunikation aufweist, wobei die Abdeckung (20) lösbar an dem Gehäuse (12) anbringbar ist, wobei die Abdeckung (20) eine Außenseite (22) mit einer besonderen Aussehensform enthält, **dadurch gekennzeichnet,**
**dass** die Abdeckung (20) an wenigstens einem Teil davon ein Material mit einer solchen Materialeigenschaft aufweist, dass das Aussehen durch einen Benutzer durch Umformen der gleichen Abdeckung verändert werden kann, die der Benutzer selbst unter Verwendung sehr einfacher Mittel, die normalerweise zuhause zur Verfügung stehen, vornehmen kann, ohne die Abdeckung zu zerstören, wobei
beim mechanischen Anpassen an das Gehäuse (12) weghängende Teile festgelegt sind.

2. Abdeckung nach Anspruch 1, bei welcher das Material ein thermisch formbares Material aufweist, das zum Beispiel ausgebildet ist, um durch Heizen des Materials auf eine Temperatur weit über Umgebungstemperatur formbar zu sein.

3. Abdeckung nach Anspruch 1 oder 2, bei welcher das Material ein thermoplastisches Material aufweist.

4. Abdeckung nach Anspruch 3, bei welcher das thermoplastische Material wenigstens ein thermoplastisches Polymer oder eine thermoplastische Polymermischung aufweist.

5. Abdeckung nach Anspruch 4, bei welcher die Abdeckung mehrere unterschiedliche Polymere oder Polymermischungen aufweist.

6. Abdeckung nach einem der Ansprüche 4 bis 5, bei welcher das Material ausgewählt ist von Polyolefinen, zum Beispiel Polypropylen, Polyethylen oder Copolymeren davon.

7. Abdeckung nach Anspruch 1, bei welcher das Material schaumartige Materialien, Gummi oder andere bei Umgebungstemperatur formbare Materialien aufweist.

8. Abdeckung nach einem der Ansprüche 1 bis 7, bei welcher das Material lichtreflektierende Kristalle, ein Lichtleitmaterial und/oder Farbteilchen, die durch den Benutzer aktiviert werden können, aufweist.

9. Abdeckung nach einem der vorhergehenden Ansprüche, bei welcher die Abdeckung (20) ein Zubehörteil ist.

## Revendications

1. Élément de recouvrement pour un matériel électronique apte à procurer plusieurs apparences distinctes, ledit élément de recouvrement (20) étant apte à confiner au moins partiellement un boîtier (12) de l'appareil électronique (10), lequel boîtier (12) comprend des composants fonctionnels, permettant par exemple l'établissement d'une communication, ledit élément de recouvrement (20) étant assujetti de manière amovible audit boîtier (12), ledit élément de recouvrement (20) incluant une face extérieure (22) ayant une apparence distincte, **caractérisé en ce que** ledit élément de recouvrement (20) comprend au moins une partie qui est constituée d'un matériau ayant des caractéristiques matérielles telles qu'un utilisateur peut en modifier l'apparence en moulant de nouveau le même élément de recouvrement, ce que l'utilisateur peut réaliser lui-même en utilisant des moyens très simples normalement disponibles dans un environnement domestique, sans détruire l'élément de recouvrement et les parties qui sont rattachées pour assemblage mécanique avec le boîtier (12).

2. Élément de recouvrement selon la revendication 1, dans lequel le matériau comprend un matériau pouvant être moulé à la chaleur, apte par exemple à pouvoir être moulé par chauffage du matériau à une température bien au-delà de la température ambiante.

3. Élément de recouvrement selon la revendication 1 ou 2, dans lequel le matériau comprend un matériau thermoplastique.

4. Élément de recouvrement selon l'une quelconque des revendications 1 à 3, dans lequel le matériau thermoplastique comprend au moins un polymère thermoplastique ou un mélange de polymères thermoplastiques.

5. Élément de recouvrement selon la revendication 4, dans lequel l'élément de recouvrement comprend plusieurs polymères différents ou mélanges de polymères différents.

6. Élément de recouvrement selon l'une quelconque des revendications 4 et 5, dans lequel on choisit le matériau à partir de polyoléfines, par exemple, de polypropylène, de polyéthylène ou de leurs copolymères.

7. Élément de recouvrement selon la revendication 1, dans lequel le matériau comprend des matériaux de type mousse, des caoutchoucs ou d'autres matériaux pouvant être moulés à température ambiante.

8. Élément de recouvrement selon l'une quelconque des revendications 1 à 7, dans lequel le matériau comprend des cristaux réfléchissant la lumière, un matériau guidant la lumière et/ou des particules colorées que l'utilisateur peut activer.

9. Élément de recouvrement selon l'une quelconque des revendications précédentes, dans lequel l'élément de recouvrement (20) est un accessoire.
